# EUROPEAN PATENT APPLICATION

(11) **EP 3 670 694 A1**
(43) Date of publication of application: **24.06.2020**
(21) Application number: 19213951.7
(22) Date of filing: 05.12.2019
(51) Int. Cl.: C23C 8/68, C23C 8/62, C23C 18/16, B22F 3/24, B22F 3/26

(54) **ADDITIVELY MANUFACTURED ARTICLE AND METHOD OF COATING SAME**

(30) Priority: 20.12.2018 US 201816228370
(71) Applicant: Delavan, Inc., West Des Moines, IA 50265 (US)
(72) Inventor: OCKEN, Thomas J., Des Moines, IA Iowa 50310 (US)
(74) Representative: Dehns

(57) **Abstract**

A method (100) can include coating a first surface of an additively manufactured article (200) made of a base material (201) with a coating material (203) comprising at least two constituents, wherein a first constituent of the at least two constituents is configured to be at least partially transient liquid phase (TLP) diffused from the coating material into the base material at a first constituent diffusion temperature, and a second constituent of the at least two constituents is configured to not diffuse from the coating material at the first constituent diffusion temperature, heating (103) the additively manufactured article to the first constituent diffusion temperature, TLP diffusing at least a portion of the first constituent from the coating and into the base material, leaving the second constituent of the coating material on the first surface, and forming a second surface that is smoother than the first surface.

## Description

### BACKGROUND

### 1. Field

The present disclosure relates to additive manufacturing, more specifically to surface treatments for additive manufacturing.

### 2. Description of Related Art

Additively Manufactured surfaces are rough and have crevices that act like cracks. In fluidic applications, this rough condition creates reduced and turbulent fluid flow along those surfaces resulting in performance variation higher than legacy manufacturing methods. Also, the crevices essentially act as cracks and a reduction of cross sectional area which leads to reduced high cycle fatigue strength, lower yield, and reduced ultimate tensile strength.

Such conventional methods and systems have generally been considered satisfactory for their intended purpose. However, there is still a need in the art for improved surface treatments for additive manufacturing. The present disclosure provides a solution for this need.

### SUMMARY

In accordance with at least one aspect of this disclosure, a method can include coating a first surface of an additively manufactured article made of a base material with a coating material comprising at least two constituents, wherein a first constituent of the at least two constituents is configured to be at least partially transient liquid phase (TLP) diffused from the coating material into the base material at a first constituent diffusion temperature, and a second constituent of the at least two constituents is configured to not diffuse from the coating material at the first constituent diffusion temperature, heating the additively manufactured article to the first constituent diffusion temperature, TLP diffusing at least a portion of the first constituent from the coating and into the base material, leaving the second constituent of the coating material on the first surface, and forming a second surface that is smoother than the first surface.

In accordance with at least one aspect of this disclosure, a method can include coating an additively manufactured article made of a base material with a coating material comprising at least two constituents. A first constituent of the at least two constituents can be configured to be transient liquid phase (TLP) diffused from the coating material into the base material. A second constituent of the at least two constituents can be configured to not diffuse with the first constituent at least at a first constituent diffusion temperature. The method can include heating the additively manufactured article to the first constituent diffusion temperature to cause the first constituent to TLP diffuse into the base material to leave at least the second constituent of the coating material and to form a smoother outer surface layer that is smoother than an outer surface of the additively manufactured article before coating.

The base material can be or include a nickel alloy. In certain embodiments, the coating material can be or include a nickel-boron alloy such that the first constituent is boron and the second constituent is nickel. In certain embodiments, the coating material can be or includes a nickel-phosphorous alloy such that the first constituent is phosphorous, and the second constituent is nickel.

The first constituent diffusion temperature can be between about 1950 degrees F to about 2200 degrees F, and/or any other suitable temperature based on the coating material chemistry. In certain embodiments, heating can be performed from about 90 minutes to about 360 minutes. For example, heating can be performed in a vacuum or diffusion bond furnace (e.g., for a suitable diffusion bond cycle).

The method can include hot isostatic pressing (HIP) the additively manufactured article after TLP diffusion to reduce or eliminate surface porosity. Any other suitable post processing is contemplated herein.

In certain embodiments, coating can include electroless plating. In certain embodiments, coating can include electro-plating. Any other suitable type of coating is contemplated herein.

The method can include additively manufacturing the base material into the additively manufactured article before coating. Any suitable methods and/or portions thereof prior to coating are contemplated herein.

Embodiments can include any suitable article produced by any method and/or portion thereof disclosed herein. In certain embodiments, an additively manufactured article can include a structure being made of a base material defining a first surface, and a coating on the first surface defining a second surface, the coating comprising at least two constituents prior to being heated to at least at a first constituent diffusion temperature, wherein a first constituent of the at least two constituents being at least partially diffused into the base material thereby defining a first constituent gradient from the second surface to the base material, the second constituent not being diffused into the base material, the second surface being smoother than the first surface. In certain embodiments, an additively manufactured article can include an additively manufactured base material forming a structure, and a partially diffused coating thereon comprising at least two constituents. A first constituent of the at least two constituents can be at least partially diffused into the base material to form a first constituent gradient from the partially diffused coating into the base material. The second material is not diffused into the base material and the partially diffused coating forms a smooth outer surface layer that is smoother than an outer surface of the additively manufactured article before coating.

The base material and the at least two constituent can be the same as disclosed above. For example, the base material can be a nickel alloy, the first constituent can be boron, and the second constituent can be nickel such that boron is diffused into the nickel alloy base material. In certain embodiments, the first constituent can be phosphorous, and the second constituent can be nickel such that phosphorous is diffused into the nickel alloy base material.

The structure can include one or more flow passages having the partially diffused coating. Any other suitable structure is contemplated herein.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below, by way of example only and with reference to certain figures, wherein:
Fig. 1 is a flow diagram of an embodiment of a method in accordance with this disclosure.
Fig. 2A is a partial cross-sectional zoomed view of a surface of an additively manufactured article in accordance with this disclosure, shown as-grown.
Fig. 2B is a partial cross-sectional zoomed view of the surface of Fig. 2A, shown having a coating material in accordance with this disclosure applied thereto.
Fig. 2C is a partial cross-sectional zoomed view of the surface of Fig. 2B, shown after heating and transient liquid phase (TLP) diffusion, e.g., in a TLP furnace, in accordance with this disclosure.
Fig. 2D is a partial cross-sectional zoomed view of the surface of Fig. 2C, shown after hot isostatic pressing (HIP) in accordance with this disclosure.

### DETAILED DESCRIPTION

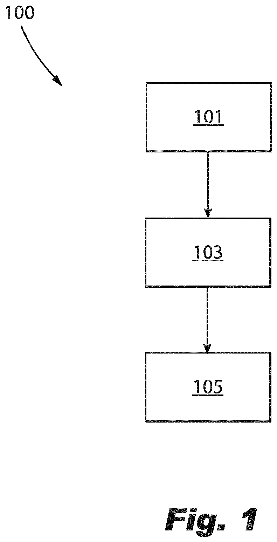

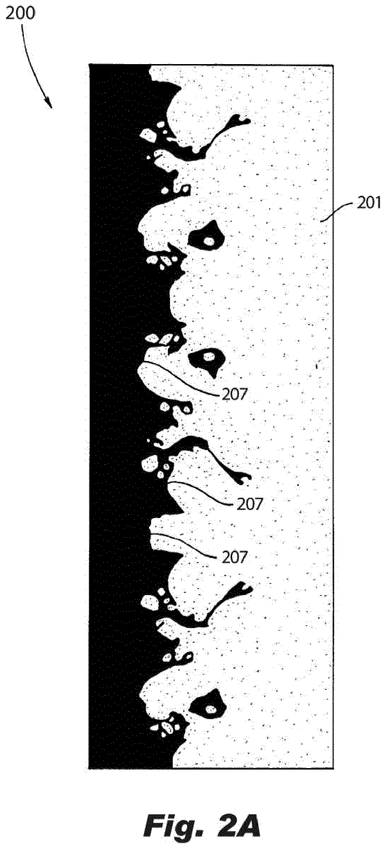

Reference will now be made to the drawings wherein like reference numerals identify similar structural features or aspects of the subject disclosure. For purposes of explanation and illustration, and not limitation, an illustrative view of an embodiment of method in accordance with the disclosure is shown in Fig. 1 and is designated generally by reference character 100. Other embodiments and/or aspects of this disclosure are shown in Figs. 2A-2D. The embodiments described herein can be used to provide smoother and stronger additively manufactured articles (e.g., for providing better flow structures for fluids).

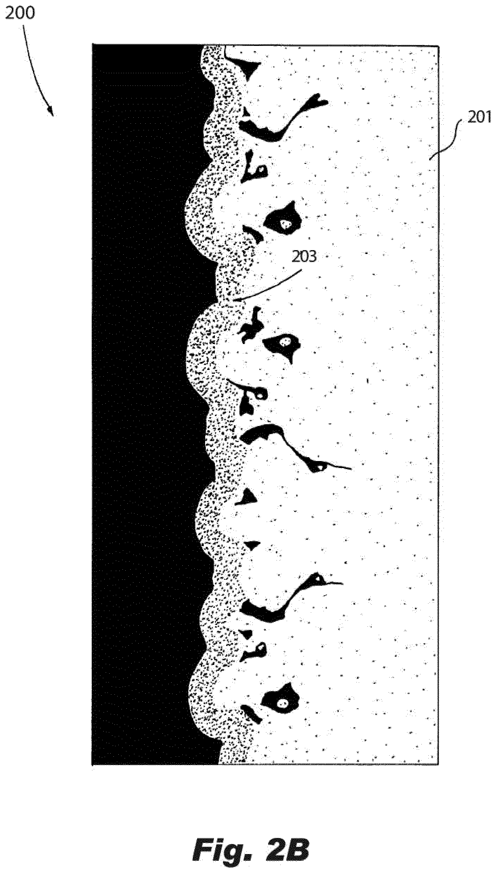

Referring to Figs. 1 and 2A-2D, a method 100 can include coating 101 at least a portion of an additively manufactured article 200 (e.g., as shown in Fig. 2A) made of a base material 201 with a coating material 203 (e.g., as shown in Fig. 2B) comprising at least two constituents. A first constituent (e.g., a chemical element) of the at least two constituents can be configured to be transient liquid phase (TLP) diffused from the coating material 203 into the base material 201. A second constituent of the at least two constituents can be configured to not diffuse with the first constituent at least at a first constituent diffusion temperature.

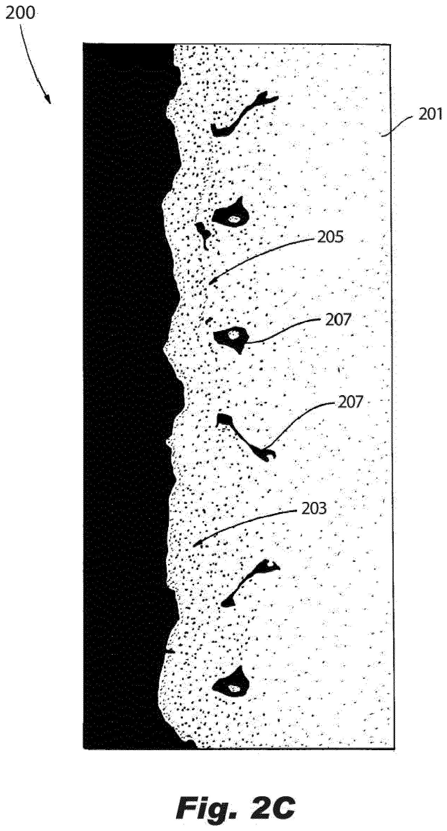

The method 100 can include heating 103 the additively manufactured article 200 to the first constituent diffusion temperature to cause the first constituent to TLP diffuse into the base material 201 (e.g., as shown in Fig. 2C) to leave at least the second constituent of the coating material 203 and to form a smoother outer surface layer 205 that is smoother than an outer surface of the additively manufactured article 200 before coating (e.g., as shown in Fig. 2A). In certain embodiments, heating 103 can also cause smoothing of peaks 207 (e.g., as shown in Fig. 2A) of the base material 201.

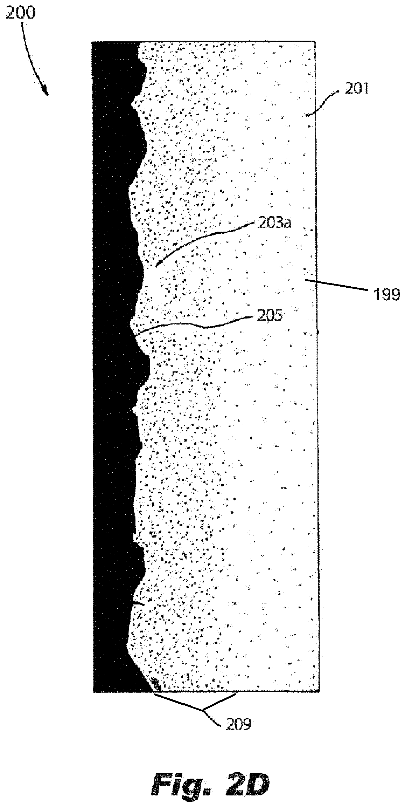

The base material 201 can be or include a nickel alloy, for example (e.g., Inconel 625, or Inconel 718 alloy, for example). In certain embodiments, the coating material 203 can be or include a nickel-boron alloy such that the first constituent is boron (e.g., the constituent shown schematically as diffused in Figs. 2C and 2D) and the second constituent is nickel. In certain embodiments, the coating material 203 can be or include a nickel-phosphorous alloy such that the first constituent is phosphorous (e.g., the constituent shown schematically as diffused in Figs. 2C and 2D), and the second constituent is nickel.

Heating 103 can be done at the first constituent diffusion temperature can be between about 1950 degrees F and about 2200 degrees F, and/or any other suitable temperature based on the coating material chemistry. In certain embodiments, heating 103 can be performed from about 90 minutes to about 360 minutes. For example, heating 103 can be performed in a vacuum or diffusion bond furnace (e.g., for a suitable diffusion bond cycle) and/or can seal the surface.

The method 100 can include hot isostatic pressing (HIP) 105 the additively manufactured article 200 after TLP diffusion (e.g., as shown in Fig. 2D) to reduce or eliminate surface porosity. The HIP can be performed at about 2100°F and about 15 ksi for about 2-4 hours. Any other suitable temperature, pressure, and time is contemplated herein. The HIP process aid in reducing and/or eliminating porosity (e.g., filling in voids 207 with coating material 203) after diffusion. Any other suitable post processing is contemplated herein.

In certain embodiments, coating 101 can include electroless plating. In certain embodiments, coating 101 can include electro-plating. Any other suitable type of coating is contemplated herein.

In certain embodiments, the method 100 can include additively manufacturing the base material 201 into the additively manufactured article 200 before coating 101. Any suitable methods and/or portions thereof prior to coating are contemplated herein. For example, in certain embodiments, a method can include coating a first surface of an additively manufactured article made of a base material with a coating material comprising at least two constituents, wherein a first constituent of the at least two constituents is configured to be at least partially transient liquid phase (TLP) diffused from the coating material into the base material at a first constituent diffusion temperature, and a second constituent of the at least two constituents is configured to not diffuse from the coating material at the first constituent diffusion temperature, heating the additively manufactured article to the first constituent diffusion temperature, TLP diffusing at least a portion of the first constituent from the coating and into the base material, leaving the second constituent of the coating material on the first surface, and forming a second surface that is smoother than the first surface.

Embodiments include any suitable article produced by any method (e.g., 100) and/or portion thereof disclosed herein. In certain embodiments, an additively manufactured article can include a structure 199 being made of a base material defining a first surface, and a coating on the first surface defining a second surface, the coating comprising at least two constituents prior to being heated to at least at a first constituent diffusion temperature, wherein a first constituent of the at least two constituents being at least partially diffused into the base material thereby defining a first constituent gradient from the second surface to the base material, the second constituent not being diffused into the base material, the second surface being smoother than the first surface. For example, in certain embodiments, an additively manufactured article 200, e.g., as shown in Fig. 2D, can include an additively manufactured base material 201 forming a structure, and a partially diffused coating 203a (made of diffused coating material 203) thereon comprising at least two constituents. A first constituent of the at least two constituents can be at least partially diffused into the base material 201 to form a first constituent gradient 209 from the partially diffused coating 203a into the base material 201. The second material is not diffused into the base material and the partially diffused coating 203a forms a smooth outer surface layer 205 that is smoother than an outer surface of the additively manufactured article 200 before coating (e.g., as shown in Fig. 2A).

The base material 201 and the at least two constituents can be the same as disclosed above. For example, the base material 201 can be a nickel alloy, the first constituent can be boron, and the second constituent can be nickel such that boron is diffused into the nickel alloy base material 201. In certain embodiments, the first constituent can be phosphorous, and the second constituent can be nickel such that phosphorous is diffused into the nickel alloy base material 201.

The structure can include one or more flow passages having the partially diffused coating. Any suitable structure, e.g., an aerospace structure such as a turbomachine component (e.g., a blade having internal cooling channels) or any other suitable structure, is contemplated herein.

In embodiments, boron is a very small atom in a crystal lattice which lowers the melting point of boron sufficiently to diffuse into nickel and/or nickel alloys (e.g., Inconel), e.g., without melting the nickel/nickel alloy. As disclosed above, a NiB coating process can create a continuous smoothing layer on top, which can be applied via an autocatalytic process (electroless plating), electroplating, or any other suitable manner (e.g., braised paste). A transient liquid phase/diffusion bond furnace can be used to cause boron to diffuse out of liquid and into solid material. Such heating brings the NiB coating to melting point and/or above, but the heating stays below melting temp of base material. Boron diffuses out into bulk material and reduces concentration of boron in the outermost layer (e.g., 203a) which increases melting point of outer layer and reduces boron gradient. TLP can also improves smoothing which can improve HIP healing process.

Embodiments of a method can provide embodiments of additive manufacturing articles that are smoother and have improved fluid flow characteristics, higher high cycle fatigue resistance, and measured cross sectional areas more closely representing the material properties of the part.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure as defined by the claims.

## Claims

1. A method (100), comprising:
coating (101) a first surface of an additively manufactured article (200) made of a base material (201) with a coating material comprising at least two constituents, wherein a first constituent of the at least two constituents is configured to be at least partially transient liquid phase (TLP) diffused from the coating material into the base material at a first constituent diffusion temperature, and a second constituent of the at least two constituents is configured to not diffuse from the coating material at the first constituent diffusion temperature;
heating (103) the additively manufactured article to the first constituent diffusion temperature;
TLP diffusing at least a portion of the first constituent from the coating and into the base material;
leaving the second constituent of the coating material on the first surface; and
forming a second surface that is smoother than the first surface.

2. The method of claim 1, wherein the base material is or includes a nickel alloy.

3. The method of any preceding claim, wherein the coating material is or includes a nickel-boron alloy such that the first constituent is boron and the second constituent is nickel; or wherein the coating material is or includes a nickel-phosphorous alloy such that the first constituent is phosphorous, and the second constituent is nickel.

4. The method of any preceding claim, wherein the first constituent diffusion temperature is between about 1065°C to about 1205°C (about 1950 degrees F to about 2200 degrees F).

5. The method of any preceding claim, wherein heating is performed from about 90 minutes to about 360 minutes; optionally wherein heating is performed in a diffusion bond furnace or a vacuum furnace.

6. The method of any preceding claim, further comprising hot isostatic pressing (HIP) the additively manufactured article after TLP diffusion to reduce or eliminate surface porosity.

7. The method of any preceding claim, wherein coating includes electroless plating.

8. The method of any of claims 1 to 6, wherein coating includes electro-plating.

9. The method of any preceding claim, further comprising additively manufacturing the base material into the additively manufactured article before coating.

10. An additively manufactured article (200), comprising:
a structure being made of a base material (201) defining a first surface; and
a coating (203) on the first surface defining a second surface, the coating comprising at least two constituents prior to being heated to at least at a first constituent diffusion temperature, wherein a first constituent of the at least two constituents being at least partially diffused into the base material thereby defining a first constituent gradient from the second surface to the base material, the second constituent not being diffused into the base material, the second surface being smoother than the first surface.

11. The article of claim 10, wherein the base material is a nickel alloy.

12. The article of claim 10 or 11, wherein the first constituent is boron and the second constituent is nickel such that boron is diffused into the nickel alloy base material; or wherein the first constituent is phosphorous, and the second constituent is nickel such that phosphorous is diffused into the nickel alloy base material.

13. The article of claim 10, 11 or 12, wherein the structure includes one or more flow passages having the partially diffused coating.

14. An article produced by the method of any of claims 1 to 9.

15. A method (100), comprising:
coating (101) an additively manufactured article (200) made of a base material (201) with a coating material comprising at least two constituents, wherein a first constituent of the at least two constituents is configured to be transient liquid phase (TLP) diffused from the coating material into the base material, wherein a second constituent of the at least two constituents is configured to not diffuse with the first constituent at least at a first constituent diffusion temperature; and
heating (103) the additively manufactured article to the first constituent diffusion temperature to cause the first constituent to TLP diffuse into the base material to leave at least the second constituent of the coating material and to form a smoother outer surface layer that is smoother than an outer surface of the additively manufactured article before coating; optionally wherein the base material is or includes a nickel alloy; and/or wherein the coating material is or includes a nickel-boron alloy such that the first constituent is boron and the second constituent is nickel.
